# EUROPÄISCHE PATENTSCHRIFT

(11) **EP 2 781 371 B1**
(45) Veröffentlichungstag und Bekanntmachung des Hinweises auf die Patenterteilung: **30.09.2015**
(21) Anmeldenummer: 14150524.8
(22) Anmeldetag: 09.01.2014
(51) Int. Cl.: B60C 9/00, D02G 3/16, D02G 3/48, B60C 9/22, B60C 9/20

(54) **Festigkeitsträgerlage für Fahrzeugluftreifen**
Stability support layer for pneumatic vehicle tires
Couche de renfort pour pneus de véhicules

(30) Priorität: 19.03.2013 DE 102013102769
(43) Veröffentlichungstag der Anmeldung: 24.09.2014
(73) Patentinhaber: Continental Reifen Deutschland GmbH, 30165 Hannover (DE)
(72) Erfinder: Justine, Carole, 31535 Scharrel (DE); Kramer, Thomas, 32049 Herford (DE); Wahl, Günter, 31249 Hohenhameln (DE)
(74) Vertreter: Finger, Karsten

(56) Entgegenhaltungen:
- EP-A2- 2 306 045
- DE-A1-102009 040 054
- JP-A- 2008 291 395

## Beschreibung

Die Erfindung betrifft eine Festigkeitsträgerlage für Fahrzeugluftreifen, vorzugsweise für die Gürtelbandage oder den Gürtel eines Fahrzeugluftreifens, enthaltend mindestens einen in elastomeres Material eingebetteten Festigkeitsträger, welcher eine Vielzahl an Monogarnen aufweist. Zudem betrifft die Erfindung einen Fahrzeugluftreifen, der zumindest eine erfindungsgemäße Festigkeitsträgerlage, insbesondere als Festigkeitsträgerlage des Gürtels und/oder der Gürtelbandage, enthält.

Festigkeitsträger für die Festigkeitsträgerlagen von Fahrzeugluftreifen sind dem Fachmann in Material und Aufbau in unterschiedlichen Ausführungen bekannt. Der mindestens eine Festigkeitsträger einer solchen Festigkeitsträgerlage wird hierbei, z.B. durch Kalandrieren, in eine Elastomermischung eingebettet, um als gummierte Festigkeitsträgerlage im Fahrzeugluftreifen eingesetzt werden zu können.

Ein "Garn" ist ein linienförmiges Gebilde aus einer oder mehreren Fasern oder aus einem oder mehreren Filamenten. Als "Monogarn" wird im Sinne der Anmeldung ein Garn aus genau einem Filament oder genau einer Endlosfaser oder auch ein Spinnfasergarn aus verdrehten Fasern begrenzter Länge verstanden. Ein Garn kann somit aus einem oder mehreren Monogarnen gebildet sein. Ein "Kord" ist ein fadenförmiges Erzeugnis, welches aus einem oder mehreren Garnen besteht, welche miteinander endverdreht sind.

Bisher werden als Festigkeitsträger der Gürtelbandage textile Festigkeitsträger eingesetzt, die stofflich primär (unmittelbar) auf dem fossilen Rohstoff Erdöl basieren, wie beispielsweise PET (Polyethylenterephthalat), Aramid oder Nylon oder Hybridkorde aus deren Garnen. Weiter ist bekannt, nicht-erdölbasierte textile Festigkeitsträger aus Viskose, wie beispielsweise Rayon oder Lyocell, einzusetzen, welche auf dem nachwachsenden Rohstoff Zellulose basieren.

Nachteilig an auf nachwachsenden Rohstoffen basierenden Materialien als Material für textile Festigkeitsträger ist, dass diese keine endlose Faserstruktur und eine stark schwankende Faserqualität aufweisen.

Zudem erschwert das fehlende Schrumpfverhalten die spezielle Anwendung von Rayon als Festigkeitsträger in der Gürtelbandage. Nachteilig an Rayon ist zudem, dass Rayon feuchtigkeitsempfindlich ist und sich die Bruchkraft des Festigkeitsträgers durch Feuchtigkeitsaufnahme verringert. Zudem ist Rayon in seiner Anschaffung kostenintensiv.

Als Festigkeitsträger des Gürtels von Fahrzeugluftreifen werden üblicherweise auf dem Rohstoff Eisen basierende Stahlkorde eingesetzt. Nachteilig ist hierbei das hohe spezifische Gewicht.

Die Entwicklung geht dahin, Produkte nicht nur in Hinblick auf ihre Eigenschaften sondern auch in Hinblick auf die verwendeten Rohstoffe zu optimieren. Hierbei ist die Verfügbarkeit der Rohstoffe von besonderer Bedeutung. Die Entwicklung geht somit dahin, Produkte zu entwickeln und bereitzustellen, die auf herkömmliche Rohstoffe wie Eisen oder das stark nachgefragte aber nur endlich verfügbare Erdöl verzichten, ohne z.B. Einbußen in der Reifenhaltbarkeit oder der Kordfestigkeit der daraus hergestellten Produkte hinnehmen zu müssen.

Aus der Offenlegungsschrift JP 2008-291395 A ist ein Antriebsriemen mit einem Zugstrang enthaltend Basaltfilamente bekannt. Die Offenbarung schweigt sich über die Eignung einer Verwendung von Basaltfasern als Bestandteil von Festigkeitsträgern des Gürtels oder der Gürtelbandage von Fahrzeugluftreifen aus.

Der vorliegenden Erfindung liegt nun die Aufgabe zu Grunde, eine Festigkeitsträgerlage, insbesondere für die Gürtelbandage und/oder den Gürtel eines Fahrzeugluftreifens, bereitzustellen, deren mindestens ein Festigkeitsträger zumindest teilweise aus einem nicht-erdölbasierten, nicht-eisenbasierten und nicht-zellulosebasierten, aber in großem Maßstab verfügbaren, Material besteht. Zudem soll die Festigkeitsträgerlage eine gleichbleibende Produktqualität aufweisen.

Die Aufgabe wird gelöst, indem eine Vielzahl der Monogarne des Festigkeitsträgers Basaltfasern sind.

Überraschenderweise eignen sich Basaltfasern sehr gut als Bestandteil von Festigkeitsträgern des Gürtels und/oder der Gürtelbandage von Fahrzeugreifen.

Festigkeitsträger enthaltend Basaltfasern weisen im Vergleich zu Festigkeitsträgern aus herkömmlichen Fasermaterialien vorteilhafte Eigenschaften auf. Sie weisen insbesondere ein, beispielsweise im Vergleich zu Stahl, vorteilhaftes Kompressionsverhalten und ein, beispielsweise im Vergleich zu Nylon, hohes Elastizitätsmodul auf. Im Vergleich zu textilen Materialien zeigt Basalt zudem eine vorteilhafte thermische Stabilität sowie eine vorteilhafte chemische Beständigkeit.

Zudem ist Basalt als Rohstoff in großem Maßstab verfügbar: Das Material Basalt ist ein basisches vulkanisches Ergussgestein und somit ein Primärrohstoff. Wie Erdöl ist der Rohstoff Basalt nicht durch den Menschen gezielt erneuerbar. Basalt ist allerdings das häufigste vulkanische Gestein und somit ein natürlicher Rohstoff aus einer fast unerschöpflichen, leicht zugänglichen Quelle. Zudem wird Basalt durch vulkanische Aktivität und die innere Bewegung der Erdplatten von der Natur nachgebildet. Eine Verknappung des Rohstoffes ist somit nicht zu erwarten.

Basaltfasern sind Mineralfasern, die bei hohen Temperaturen aus einer flüssigen Basaltschmelze hergestellt werden und dann z.B. zu Garnen oder Korden weiterverarbeitet werden können. Basalt ist ein Alumosilikat, welches beispielsweise Aluminiumoxid, Siliciumdioxid, Calciumodix und Magnesiumoxid enthält. Die genaue chemische Zusammensetzung des natürlichen Rohstoffes ist geologisch determiniert und hängt vom Abbauort ab. Um die Produkteigenschaften der Basaltfasern definiert einzustellen und zu optimieren, können Basalte unterschiedlicher chemischer Zusammensetzung kombiniert werden und/oder der Basaltschmelze zusätzlich zum natürlichen Basalt andere Zusätze beigemischt sein.

"Basaltfaser" wird im Sinne der Anmeldung als Endlosbasaltfaser verstanden und ist somit ein Monogarn. Im Festigkeitsträger erstreckt sie sich im Wesentlichen über die gesamte Länge des Festigkeitsträgers.

Basaltfasern gelten als gesundheitlich unbedenklich. Basaltfasern können recycelt werden und weisen ein positives Preis-Leistungsverhältnis auf.

Mit einer Festigkeitsträgerlage mit Festigkeitsträgern beinhaltend Basaltfasern wird somit eine vorteilhafte Festigkeitsträgerlage für Fahrzeugluftreifen, insbesondere für den Gürtel oder die Gürtelbandage von Fahrzeugluftreifen, bereitgestellt, die nicht vorrangig auf erdölbasierten, eisenbasierten oder zellulosebasierten Materialien beruht. Zudem können Basaltfasern in gleichbleibender Qualität erzeugt werden und stehen somit in gleichbleibender Produktqualität zur Verfügung.

Die Basaltfasern des Festigkeitsträgers können alle die gleiche chemische Zusammensetzung aufweisen. Der Festigkeitsträger kann aber auch eine Vielzahl an Basaltfasern einer chemischen Zusammensetzung sowie eine Vielzahl an Basaltfasern einer anderen chemischen Zusammensetzung beinhalten. Unter einer "Vielzahl an" wird eine Anzahl von mindestens 20 verstanden. Die Monogarne eines Festigkeitsträgers können sich auch in ihrer Feinheit unterscheiden. Durch die Kombination unterschiedlicher Monogarne können deren unterschiedlichen positiven Eigenschaften kombiniert und genutzt werden.

In einer vorteilhaften Weiterbildung der Erfindung ist vorgesehen, dass die Basaltfasern mindestens 90 Gew.-%, insbesondere mindestens 95 Gew.-%, insbesondere 100 Gew.-%, natürliches Basalt enthalten. Die Gewichtsprozent (Gew.-%) beziehen sich hierbei auf die reine Basaltfaser, also die Basaltfaser ohne eine optionale Funktionalisierung oder einen optionalen Haftvermittler. Hierdurch kann eine Festigkeitsträgerlage bereitgestellt werden, deren mindestens ein Festigkeitsträger teilweise oder ganz aus einem in großem Maßstab verfügbaren Rohstoff besteht und nicht primär auf Erdöl, Eisen oder Zellulose basiert.

In einer vorteilhaften Weiterbildung der Erfindung ist vorgesehen, dass alle Monogarne des Festigkeitsträgers Basaltfasern sind. Die Festigkeitsträger der hierdurch bereitgestellten Festigkeitsträgerlage basieren somit ganz oder zu einem großen Teil aus dem in großem Maßstab verfügbaren Rohstoff Basalt und nicht primär auf Erdöl, Eisen oder Zellulose. Sie stehen zudem in gleichbleibender Produktqualität zur Verfügung.

In einer vorteilhaften Weiterbildung der Erfindung ist vorgesehen, dass der Festigkeitsträger eine Vielzahl an Monogarnen aus nicht-basaltischem Material aufweist. Somit weist der Festigkeitsträger sowohl eine Vielzahl an Basaltfasern als auch eine Vielzahl an Monogarnen aus nicht-basaltischem Material auf. Das nicht-basaltische Material kann aus der Gruppe enthaltend Polyester- (PE), Polyamid- (PA), Aramid-, Arselon-, Polyetherketon- (PEK), Polyetheretherketon- (PEEK), Polyketon- (POK), Rayon-, Viskose-, Chemie-, Natur-, Glas- und/oder Karbonfasern ausgewählt sein. Bei den Polyamiden kann es sich um die Polyamide PA 4.6, PA 6, PA 6.6, PA 10.10, PA 11 und/oder PA12 handeln. Bei den Polyestern kann es sich um die Polyester Polyethylennaphthalat (PEN), Polybutylenterephthalat (PBT), Polybutylennaphttalat (PBN), Polpropylenterephthalat (PPT), Polypropylennaphthalat (PPN), Polyethylenterephthalat (PET), High-Modulus Low-Shrinkage-PET (HMLS-PET), insbesondere um thermoplastische Polyester und/oder vernetzte ungesättigte Polyester, handeln. Aufzählungen, die "und/oder" enthalten, sind so zu verstehen, dass alle Glieder der Aufzählung mit und/oder gekoppelt sind. Durch die Verwendung unterschiedlicher Materialien können Eigenschaften der einzelnen Materialien gezielt kombiniert und somit die Eigenschaften der Festigkeitsträgerlage vorteilhaft eingestellt werden.

In einer vorteilhaften Weiterbildung der Erfindung ist vorgesehen, dass der Festigkeitsträger eine Vielzahl an Monogarnen aus vollständig oder zumindest teilweise nachwachsenden Rohstoffen, insbesondere aus zellulose-basierten Chemiefasern und/oder aus Naturfasern, aufweist. Bei den zellulose-basierten Chemiefasern ist insbesondere Rayon und Lyocell zu nennen. Bei den Naturfasern ist insbesondere Wolle (Keratin) zu nennen. Somit kann eine Festigkeitsträgerlage bereitgestellt werden, deren Material der Monogarne der Festigkeitsträger ganz oder teilweise auf Basalt sowie auf nachwachsenden Rohstoffen basieren und somit ganz oder teilweise auf erdöl-, eisen- oder zellulosebasierte Materialien verzichten. Als weiterer Vorteil können die Eigenschaften des Festigkeitsträgers über die Materialauswahl gezielt eingestellt werden.

In einer vorteilhaften Weiterbildung der Erfindung ist vorgesehen, dass die Basaltfasern mit einer Epoxy- und/oder Vinyl-Funktionalisierung versehen sind. Hierdurch kann eine zuverlässige Haftung der Basaltfasern zum Haftmittel erwirkt werden.

In einer vorteilhaften Weiterbildung der Erfindung ist vorgesehen, dass der Festigkeitsträger ein Kord aus mindestens einem Garn ist, wobei das mindestens eine Garn eine Vielzahl an Basaltfasern aufweist. Hierdurch ist eine Festigkeitsträgerlage geschaffen, die sich insbesondere als Festigkeitsträgerlage der Gürtelbandage und/oder der Gürtelbandage eines Fahrzeugluftreifens eignet, deren mindestens ein Festigkeitsträger zumindest teilweise aus einem nicht-erdölbasierten, nicht-eisenbasierten oder nicht-zellulosebasierten, aber in großem Maßstab verfügbaren, Material besteht.

Vorteilhaft ist, wenn mindestens ein Garn des Kordes aus Basaltfasern gebildet ist. Vorteilhaft ist weiter, wenn alle Garne des Kordes aus Basaltfasern gebildet sind.

Vorteilhaft ist eine Garnfeinheit von 250 bis 5000 dtex und eine Endverzwirnung des vorverdrehten Materials mit 25 bis 600 t/m.

Vorteilhaft ist es weiter, wenn der Kord zwei oder mehr Garne aufweist.

Dabei können sich die mindestens zwei Garne eines Festigkeitsträgers beispielsweise in der Verdrehungsrichtung und/oder in der Verdrehungszahl und/oder im Titer und/oder in der Feinheit unterscheiden. Die Eigenschaften des Festigkeitsträgers können somit gezielt eingestellt werden.

Es ist zweckmäßig, wenn der Kord mindestens ein Garn aufweist, welches eine Vielzahl an Basaltfasern sowie eine Vielzahl an Monogarnen aus nicht-basaltischem Material, insbesondere aus nicht-basaltischem Material aus der oben genannten Gruppe, aufweist.

Vorteilhaft ist weiter, wenn der Kord mindestens ein Garn aus Basaltfasern sowie mindestens ein Garn aus nicht-basaltischen Material, insbesondere aus nicht-basaltischem Material aus der oben genannten Gruppe, aufweist. Hierbei kann es sich beispielsweise um einen Kord aus einem Garn aus Basaltfasern sowie einem weiteren Garn aus PE, insbesondere PET oder PEN, oder einem weiteren Garn aus Polyamid, insbesondere PA 6.6, PA 6 oder PA 10.10, oder einem weiteren Garn aus Aramid, Arselon, PEK oder POK, handeln. Vorteilhaft ist weiter ein Kord aus einem Garn aus Basaltfasern sowie einem weiteren Garn aus Rayon, Lyocell oder Naturfasern.

Durch die Verwendung unterschiedlicher Materialien können die Vorteile der einzelnen Materialien kombiniert und über den geometrischen Effekt der Verzwirnung optimal genutzt werden. Die Eigenschaften des Kordes können somit gezielte eingestellt werden.

In einer vorteilhaften Weiterbildung der Erfindung ist vorgesehen, dass der Festigkeitsträger ein Band ist, dessen Querschnitt der Bedingung a < b entspricht, wobei a die Querschnittshöhe und b die Querschnittsbreite des Bandes definiert, dass das Band in der Festigkeitsträgerlage derart angeordnet ist, dass die Erstreckungsrichtung von b in etwa parallel zur flächigen Erstreckung der Festigkeitsträgerlage ausgerichtet ist, dass das Band eine Vielzahl an Monogarnen enthält, welche etwa parallel zur Längserstreckung des Bandes angeordnet sind, wobei die Monogarne innerhalb des Bandes mittels eines Haftvermittlers zusammengehalten werden, und dass eine Vielzahl der Monogarne Basaltfasern sind. Die Monogarne sind im Wesentlichen in Längserstreckung des Bandes angeordnet. Sie sind nicht gezielt miteinander verdreht, sondern größtenteils zumindest abschnittsweise parallel angeordnet, wobei auch Kreuzungen von Monogarnen möglich sind. Die geringe Querschnittshöhe a sowie die Querschnittsbreite b des Bandes wird durch die Anordnung der Monogarne, welche vorrangig in Erstreckungsrichtung der Querschnittsbreite b nebeneinander angeordnet sind, bewirkt. Das Band selbst ist in der Festigkeitsträgerlage nicht gezielt verdreht angeordnet. Jedes Monogam ist mit einem Haftvermittler verbunden und wird mittels dieses Haftvermittlers zumindest abschnittsweise mit anderen Monofilamenten des Bandes zusammengehalten.

Bedeutend ist hierbei, dass durch den Einsatz von Bändern mit sehr flachem Querschnitt als Festigkeitsträger eine Festigkeitsträgerlage mit geringer Höhe bereitgestellt wird. Dies bedingt eine geringere Hysterese. Auch durch die Einsparung an elastomerem Material sowie an Festigkeitsträgermaterial sind Hysterese sowie Gewicht reduziert. Durch eine solch flache Festigkeitsträgerlage kann somit beim Einsatz im Fahrzeugluftreifen ein verringerter Rollwiderstand des Fahrzeugluftreifens erwirkt werden.

Es ist zweckmäßig, wenn das Band eine Feinheit von 50 bis 7000 dtex, bevorzugt von 500 bis 3500 dtex, besonders bevorzugt von 1200 bis 1500 dtex, aufweist, und wenn das Band eine Anzahl von 25 bis 4500 Filamenten, bevorzugt eine Anzahl von 450 bis 2000 Filamenten, besonders bevorzugt eine Anzahl von 500 bis 1200 Filamenten, aufweist. Zweckmäßig ist es zudem, wenn die Querschnittshöhe a der Bedingung 1 µm < a < 1500 µm, vorzugsweise 1 µm < a < 500 µm, bevorzugt 1 µm < a < 200 µm, entspricht. Vorteilhaft ist es, wenn die Querschnittsbreite b der Bedingung 100 µm < b < 15000 µm, bevorzugt 300 µm < b < 10000 µm, genügt, und wenn das Verhältnis von Querschnittsbreite b zu Querschnittshöhe a die Bedingung 4000 > b / a > 1.5, insbesondere 200 > b / a > 3.5, insbesondere 19 > b / a > 6.5, erfüllt.

Es ist vorteilhaft, wenn der Haftvermittler des Bandes ein vernetzbares Harz, ein flüssiges thermoplastisches Harz, ein Wachs oder eine Substanz, beispielsweise vom Typ RFL (Resorcin-Formaldehyd-Latex), welche mit elastomerem Material wechselwirken kann, ist. Vorteilhaft ist, wenn der Haftvermittler aushärtbar ist und im Band in ausgehärtetem Zustand vorliegt. Vorteilhaft ist weiter, wenn das Band auch eine Vielzahl an Monogarnen aus nicht-basaltischem Material aufweist.

Es ist zweckmäßig, die Oberfläche des Festigkeitsträgers zur Gewährleistung der Haftung zwischen Festigkeitsträger und Haftimprägnierung oder Festigkeitsträger und elastomerem Material mechanisch, physikalisch und/oder chemisch zu aktivieren.

Um eine zuverlässige Haftung des Festigkeitsträgers zum elastomeren Material zu gewährleisten, ist es zweckmäßig, die Basaltfasern und/oder den Festigkeitsträger zusätzlich mit einer Haftimprägnierung, z.B. mit einem RFL-Dip im 1- oder 2-Bad-Verfahren, zu versehen.

Ferner betrifft die Erfindung einen Fahrzeugluftreifen, der zumindest eine erfindungsgemäße Festigkeitsträgerlage des Gürtels und/oder der Gürtelbandage enthält. Es handelt sich dabei vorzugsweise um einen PKW-Reifen oder einen Nutzfahrzeugreifen.

Vorteilhaft ist es, wenn die Festigkeitsträgerlage zumindest zwei in Material und/oder Aufbau unterschiedliche Festigkeitsträger aufweist. Dabei kann es sich um mindestens zwei Korde handeln, die sich beispielsweise im Garnmaterial und/oder im Gamaufbau und/oder der Garnfeinheit und/oder der Garnkombination und/oder der Kordkonstruktion unterscheiden. Beispielsweise kann die Festigkeitsträgerlage mindestens ein Kord aus Basaltfasern sowie mindestens ein Kord aus Nylon aufweisen. Es kann sich auch um mindestens zwei Bänder handeln, die sich im Material und/oder im Bandquerschnitt und/oder der Anzahl und/oder Feinheit der Monogarne und/oder Bandfeinheit unterscheiden. Die Festigkeitsträgerlage kann beispielsweise neben mindestens einem Band enthaltend eine Vielzahl an Basaltfasern mindestens ein weiteres Band aufweisen, dessen Monogarne aus Nylon gebildet sind. Die Festigkeitsträgerlage kann auch neben mindestens einem Band mindestens ein Garn oder ein Kord enthalten. Die Anordnung der unterschiedlichen Festigkeitsträger in der Festigkeitsträgerlage kann alternierend erfolgen. Durch die Verwendung unterschiedlicher Festigkeitsträger können die Vorteile der einzelnen Festigkeitsträger kombiniert werden.

Im Querschnitt der Festigkeitsträgerlage können die Festigkeitsträger in etwa parallel zueinander ausgerichtet sein. Hierbei kann es sich um mindestens zwei Festigkeitsträger handeln, die parallel zueinander ausgerichtet sind, oder um einen Festigkeitsträger, der parallel zueinander ausgerichtete Abschnitte aufweist. Beispielsweise kann es sich hierbei um einen Festigkeitsträger der Festigkeitsträgerlage der Gürtelbandage eines Fahrzeugluftreifens handeln, der in etwa parallel zur Umfangsrichtung des Fahrzeugluftreifens mit mehr als zwei Umwicklungen um einen Bereich des Gürtels entlang der axialen Breite gewickelt ist.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Teilradialschnitt durch einen Fahrzeugluftreifen;
Fig. 2 einen Kord 20 als Festigkeitsträger gemäß der Erfindung;
Fig. 3 einen weiteren Kord 20 als Festigkeitsträger gemäß der Erfindung;
Fig. 4 einen Querschnitt durch einen Abschnitt einer Festigkeitsträgerlage 13 enthaltend zwei Bänder 9 gemäß der Erfindung.

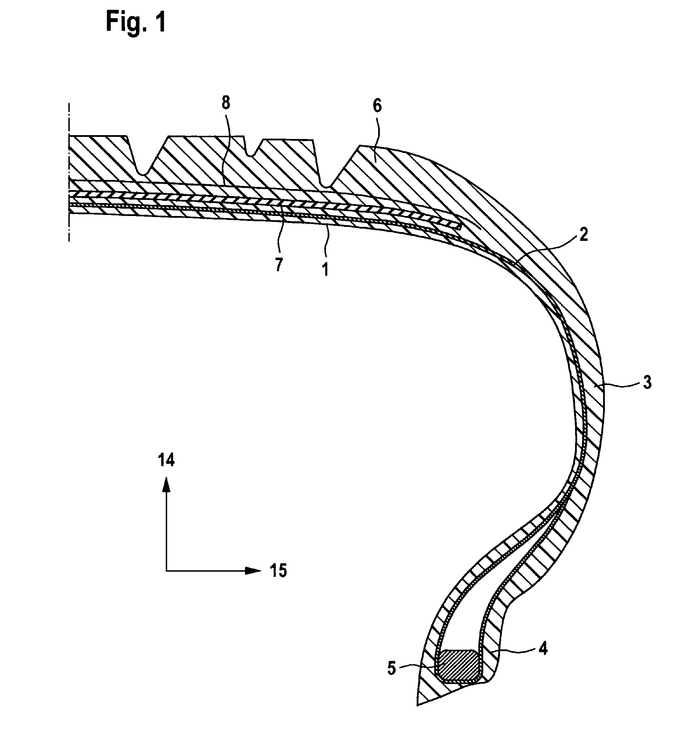

Die Fig. 1 zeigt die rechte Hälfte eines Querschnittes durch einen Fahrzeugluftreifen für einen Personenkraftwagen. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage 13 beinhaltende Karkasse 2, die in herkömmlicher Weise vom Zenitbereich des Fahrzeugluftreifens über die Seitenwände 3 bis in die Wulstbereiche 4, enthaltend mindestens eine Festigkeitsträgerlage 13 als Wulstverstärkung, reicht und dort durch Umschlingen zugfester Wulstkerne 5 verankert ist, einen radial oberhalb der Karkasse befindlichen profilierten Laufstreifen 6 und einen zwischen dem Laufstreifen 6 und der Karkasse 2 angeordneten, zwei Festigkeitsträgerlagen 13 beinhaltenden Gürtel 7, welcher in herkömmlicher Weise radial außen mit der Festigkeitsträgerlage 13 der Gürtelbandage 8 abgedeckt ist.

Bei Fahrzeugluftreifen in wie in Fig. 1 gezeigter radialer Bauart sind die Festigkeitsträger der Festigkeitsträgerlage 13 der Karkasse 2 in etwa parallel zueinander in etwa in radialer Richtung 14 angeordnet. Der Gürtel 7 weist zwei weitgehend übereinander angeordnete Festigkeitsträgerlagen 13 auf, wobei die Festigkeitsträger in den einzelnen Lagen jeweils in etwa parallel zueinander ausgerichtet sind. Die Erstreckungsrichtung der Festigkeitsträger in den zwei Festigkeitsträgerlagen 13 verlaufen in der einen Lage in spitzem Winkel zum Reifenumfang in der einen Richtung steigend, in der anderen Lage in spitzem Winkel zum Reifenumfang in der anderen Richtung steigend. Die Festigkeitsträgerlage 13 der Gürtelbandage 8 beinhaltet einen Festigkeitsträger, der kontinuierlich entlang der axialen Breite gewickelt ist.

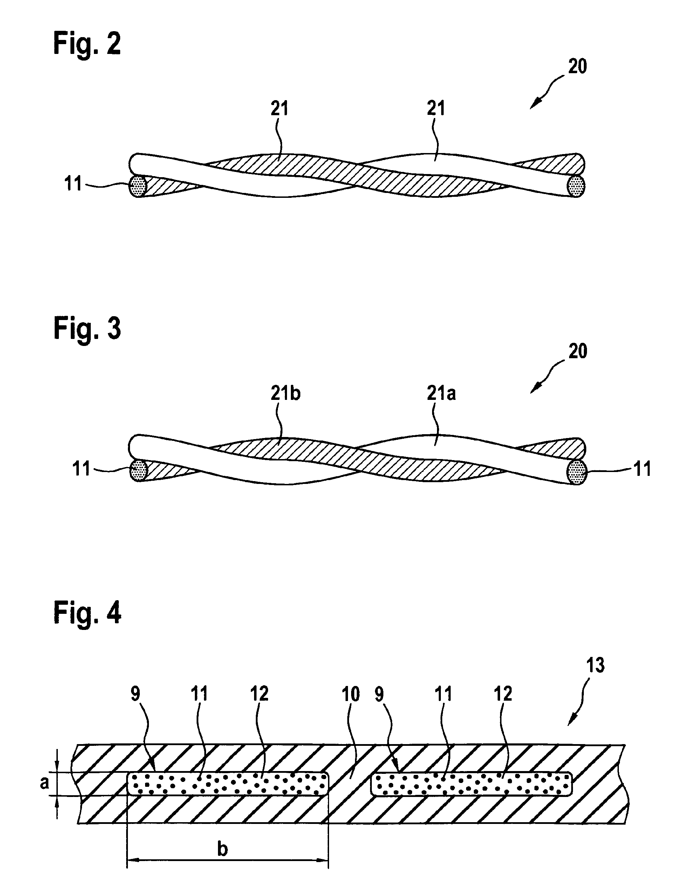

Figur 2 zeigt einen Kord 20 für eine Festigkeitsträgerlage 13 gemäß der Erfindung. Der Kord 20 besteht aus zwei Garnen 21, die Monogarne 11 aufweisen. Die Monogarne 11 der Garne 21 sind Basaltfasern. Die Feinheit der Garne 21 beträgt jeweils 1000 dtex. Sie sind jeweils mit 50 t/m in S-Richtung erstverdreht und miteinander mit 50 t/m in Z-Richtung endverdreht. Die Basaltfasern sind mit einer Vinylfunktionalisierung sowie mit einer RFL Haftimprägnierung versehen. Auch der Kord 20 ist mit einer RFL Haftimprägnierung versehen.

Figur 3 zeigt einen weiteren Kord 20 für eine Festigkeitsträgerlage 13 gemäß der Erfindung. Der Kord 20 besteht aus zwei Garnen 21a und 21b, welche mit 75 t/m in S-Richtung miteinander endverdreht sind. Die Monogarne 11 des Garns 21a sind aus PA 6.6. Sie sind mit 100 t/m miteinander erstverdreht. Der Garn 21a weist eine Feinheit von 940 dtex auf. Die Monogarne 11 des Garns 21b sind Basaltfasern. Sie sind mit 75 t/m miteinander erstverdreht. Der Garn 21b weist eine Feinheit von 1000 dtex auf. Die Basaltfasern 11 des Garns 21b sind chemische aktiviert, der Kord 20 ist mit einer RFL Haftimprägnierung versehen.

Figur 4 zeigt einen Querschnitt durch einen Abschnitt einer erfindungsgemäßen Festigkeitsträgerlage 13, beinhaltend zwei Bänder 9 als Festigkeitsträger, welche in elastomeres Material 10 eingebettet sind. Die Querschnittsebene steht hierbei senkrecht zur Längserstreckungsrichtung der Bänder. Die Monogarne 11 der Bänder 9 sind Basaltfasern. Der Übersichtlichkeit halber sind in Fig. 2 nur eine geringe Zahl der Basaltfasern dargestellt. Die Basaltfasern 11 sind mit einer Epoxyfunktionalisierung versehen und mittels eines vernetzbaren Harzes als Haftvermittler 12 zusammengehalten. Der Haftvermittler 12 macht dabei 4 Gew.-% des Gewichtes der Bänder 9 aus. Die Bänder 9 weisen eine Feinheit von 1300 dtex und eine Anzahl von 1000 Filamenten 11 auf. Die Querschnittshöhe a genügt der Bedingung a = 90 µm, das Verhältnis von Querschnittsbreite b zu Querschnittshöhe a genügt der Bedingung b / a = 15. Die Bänder 9 sind mit einem RFL-Dip zur Haftimprägnierung versehen.

### Bezugszeichenliste

### (Teil der Beschreibung)

- 1: Innenschicht
- 2: Karkasse
- 3: Seitenwand
- 4: Wulstbereich
- 5: Wulstkern
- 6: Laufstreifen
- 7: Gürtel
- 8: Gürtelbandage
- 9: Band
- 10: elastomeres Material
- 11: Monogarn
- 12: Haftvermittler
- 13: Festigkeitsträgerlage
- 14: radiale Richtung
- 15: axiale Richtung
- 20: Kord
- 21: Garn
- 21a: Garn
- 21b: Garn
- a: Querschnittshöhe des Bandes
- b: Querschnittsbreite des Bandes

## Patentansprüche

1. Festigkeitsträgerlage (13) für Fahrzeugluftreifen, vorzugsweise für die Gürtelbandage (8) oder den Gürtel (7) eines Fahrzeugluftreifens, enthaltend mindestens einen in elastomeres Material (10) eingebetteten Festigkeitsträger, welcher eine Vielzahl an Monogarnen (11) aufweist,
**dadurch gekennzeichnet, dass**
eine Vielzahl der Monogarne (11) des Festigkeitsträgers Basaltfasern sind.

2. Festigkeitsträgerlage (13) nach Anspruch 1,
**dadurch gekennzeichnet, dass** die Basaltfasern mindestens 90 Gew.-%, insbesondere mindestens 95 Gew.-%, insbesondere 100 Gew.-%, natürliches Basalt enthalten.

3. Festigkeitsträgerlage (13) nach zumindest einem der vorangehenden Ansprüche,
**dadurch gekennzeichnet, dass** alle Monogarne (11) des Festigkeitsträgers Basaltfasern sind.

4. Festigkeitsträgerlage (13) nach zumindest einem der vorangehenden Ansprüche,
**dadurch gekennzeichnet, dass** der Festigkeitsträger eine Vielzahl an Monogarnen (11) aus nicht-basaltischem Material aufweist.

5. Festigkeitsträgerlage (13) nach zumindest einem der vorangehenden Ansprüche,
**dadurch gekennzeichnet, dass** der Festigkeitsträger eine Vielzahl an Monogarnen (11) aus vollständig oder zumindest teilweise nachwachsenden Rohstoffen, insbesondere aus zellulose-basierten Chemiefasern und/oder aus Naturfasern, aufweist.

6. Festigkeitsträgerlage (13) nach zumindest einem der vorangehenden Ansprüche,
**dadurch gekennzeichnet, dass** die Basaltfasern mit einer Epoxy- und/oder Vinyl-Funktionalisierung versehen sind.

7. Festigkeitsträgerlage (13) nach zumindest einem der vorangehenden Ansprüche,
**dadurch gekennzeichnet, dass** der Festigkeitsträger ein Kord aus mindestens einem Garn ist, wobei das mindestens eine Garn eine Vielzahl an Basaltfasern aufweist.

8. Festigkeitsträgerlage (13) nach zumindest den Ansprüchen 1 und 2,
**dadurch gekennzeichnet, dass** der Festigkeitsträger ein Band (9) ist, dessen Querschnitt der Bedingung a < b entspricht, wobei a die Querschnittshöhe und b die Querschnittsbreite des Bandes (9) definiert, dass das Band (9) in der Festigkeitsträgerlage (13) derart angeordnet ist, dass die Erstreckungsrichtung von b in etwa parallel zur flächigen Erstreckung der Festigkeitsträgerlage (13) ausgerichtet ist, dass das Band (9) eine Vielzahl an Monogarnen (11) enthält, welche etwa parallel zur Längserstreckung des Bandes (9) angeordnet sind, wobei die Monogarne (11) innerhalb des Bandes (9) mittels eines Haftvermittlers (12) zusammengehalten werden, und dass eine Vielzahl der Monogarne (11) Basaltfasern sind.

9. Festigkeitsträgerlage (13) nach zumindest einem der vorangehenden Ansprüche,
**dadurch gekennzeichnet, dass** die Basaltfasern und/oder der Festigkeitsträger mit einer Haftimprägnierung zur Gewährleistung der Haftung des Festigkeitsträgers zum elastomeren Material (10) versehen ist.

10. Fahrzeugluftreifen enthaltend zumindest eine Festigkeitsträgerlage (13), insbesondere eine Festigkeitsträgerlage (13) des Gürtels (7) und/oder der Gürtelbandage (8), nach zumindest einem der vorangehenden Ansprüche.

## Claims

1. Reinforcing layer (13) for pneumatic vehicle tyres, preferably for the breaker belt bandage (8) or the breaker belt (7) of a pneumatic vehicle tyre, containing at least one reinforcing element embedded in an elastomeric material (10) and comprising a large number of mono yarns (11), **characterized in that**
a large number of mono yarns (11) of the reinforcing element are basalt fibres.

2. Reinforcing layer (13) according to Claim 1, **characterized in that** the basalt fibres contain at least 90% by weight, in particular at least 95% by weight, in particular 100% by weight, natural basalt.

3. Reinforcing layer (13) according to at least one of the preceding claims,
**characterized in that** all of the mono yarns (11) of the reinforcing element are basalt fibres.

4. Reinforcing layer (13) according to at least one of the preceding claims,
**characterized in that** the reinforcing element comprises a large number of mono yarns (11) of non-basaltic material.

5. Reinforcing layer (13) according to at least one of the preceding claims,
**characterized in that** the reinforcing element comprises a large number of mono yarns (11) of completely or at least partially renewable raw materials, in particular of cellulose-based man-made fibres and/or of natural fibres.

6. Reinforcing layer (13) according to at least one of the preceding claims,
**characterized in that** the basalt fibres are provided with an epoxy and/or vinyl functionalization.

7. Reinforcing layer (13) according to at least one of the preceding claims,
**characterized in that** the reinforcing element is a cord of at least one yarn, the at least one yarn comprising a large number of basalt fibres.

8. Reinforcing layer (13) according to at least Claims 1 and 2,
**characterized in that** the reinforcing element is a band (9), the cross section of which satisfies the condition a < b, where a defines the cross-sectional height and b defines the cross-sectional width of the band (9), **in that** the band (9) is arranged in the reinforcing layer (13) in such a way that the direction of extent of b is aligned approximately parallel to the planar extent of the reinforcing layer (13), **in that** the band (9) contains a large number of mono yarns (11), which are arranged approximately parallel to the longitudinal extent of the band (9), wherein the mono yarns (11) are held together within the band (9) by means of an adhesion promoter (12), and **in that** a large number of the mono yarns (11) are basalt fibres.

9. Reinforcing layer (13) according to at least one of the preceding claims,
**characterized in that** the basalt fibres and/or the reinforcing element is/are provided with an adhesive impregnation to ensure the adhesive bonding of the reinforcing element to the elastomeric material (10).

10. Pneumatic vehicle tyre containing at least one reinforcing layer (13), in particular a reinforcing layer (13) of the breaker belt (7) and/or of the breaker belt bandage (8), according to at least one of the preceding claims.

## Revendications

1. Couche de renfort (13) pour pneus de véhicule, de préférence pour le bandage de ceinture (8) ou la ceinture (7) d'un pneu de véhicule, contenant au moins un renfort noyé dans un matériau élastomère (10), qui présente une multiplicité de monofilaments (11), **caractérisée en ce qu'**une multiplicité des monofilaments (11) du renfort sont des fibres de basalte.

2. Couche de renfort (13) selon la revendication 1, **caractérisée en ce que** les fibres de basalte contiennent au moins 90% en poids, en particulier au moins 95 % en poids, en particulier 100% en poids de basalte naturel.

3. Couche de renfort (13) selon au moins une des revendications précédentes, **caractérisée en ce que** tous les monofilaments (11) du renfort sont des fibres de basalte.

4. Couche de renfort (13) selon au moins une des revendications précédentes, **caractérisée en ce que** le renfort présente une multiplicité de monofilaments (11) en matériau non basaltique.

5. Couche de renfort (13) selon au moins une des revendications précédentes, **caractérisée en ce que** le renfort présente une multiplicité de monofilaments (11) en matières premières totalement ou au moins partiellement à croissance postérieure, en particulier en fibres chimiques à base de cellulose et/ou en fibres naturelles.

6. Couche de renfort (13) selon au moins une des revendications précédentes, **caractérisée en ce que** les fibres de basalte sont dotées d'une fonctionnalisation époxy et/ou vinyle.

7. Couche de renfort (13) selon au moins une des revendications précédentes, **caractérisée en ce que** le renfort est une corde en au moins un fil, dans laquelle ledit au moins un fil présente une multiplicité de fibres de basalte.

8. Couche de renfort (13) selon au moins une des revendications 1 et 2, **caractérisée en ce que** le renfort est une bande (9), dont la section transversale correspond à la condition a < b, dans laquelle a définit la hauteur de section transversale et b la largeur de section transversale de la bande (9), **en ce que** la bande (9) est agencée dans la couche de renfort (13) de telle manière que la direction d'extension de b soit orientée environ parallèlement à l'extension superficielle de la couche de renfort (13), **en ce que** la bande (9) contient une multiplicité de monofilaments (11), qui sont disposés environ parallèlement à l'extension longitudinale de la bande (9), dans laquelle les monofilaments (11) sont solidarisés à l'intérieur de la bande (9) au moyen d'un agent adhésif (12), et **en ce qu'**une multiplicité de monofilaments (11) sont des fibres de basalte.

9. Couche de renfort (13) selon au moins une des revendications précédentes, **caractérisée en ce que** les fibres de basalte et/ou le renfort sont dotées/est doté d'une imprégnation d'accrochage pour garantir l'adhérence du renfort au matériau élastomère (10).

10. Pneu de véhicule contenant au moins une couche de renfort (13), en particulier une couche de renfort (13) de la ceinture (7) et/ou du bandage de ceinture (8), selon au moins une des revendications précédentes.
